# EUROPÄISCHE PATENTSCHRIFT

(11) **EP 1 586 151 B1**
(45) Veröffentlichungstag und Bekanntmachung des Hinweises auf die Patenterteilung: **23.05.2007**
(21) Anmeldenummer: 04700129.2
(22) Anmeldetag: 05.01.2004
(51) Int. Cl.: H02G 3/10, H02B 1/20

(54) **SAMMELSCHIENENSYSTEM UND ANSCHLUSS- ODER GERÄTE-ADAPTER**
BUSBAR SYSTEM AND CONNECTING OR APPLIANCE ADAPTER
SYSTEME DE BARRES COLLECTRICES ET ADAPTATEUR DE CONNEXION OU D'APPAREIL

(30) Priorität: 11.01.2003 DE 10300723
(43) Veröffentlichungstag der Anmeldung: 19.10.2005
(73) Patentinhaber: Rittal GmbH & Co. KG, 35745 Herborn (DE)
(72) Erfinder: WAGENER, Hans, 35716 Dietzhölztal (DE)
(74) Vertreter: Fleck, Hermann-Joseph
(86) Internationale Anmeldenummer: PCT/EP2004/000014
(87) Internationale Veröffentlichungsnummer: WO 2004/064214

(56) Entgegenhaltungen:
- EP-A- 1 094 579
- DE-A- 19 744 827
- DE-C- 19 714 839

## Beschreibung

Die Erfindung bezieht sich auf ein Sammelschienensystem mit einer Montageeinheit zum Aufnehmen mehrerer Stromsammelschienen und mindestens einem Anschluss- oder Geräte-Adapter, der eine Aufnahmebrücke zum Aufnehmen von Klemmen oder Geräten aufweist und zum elektrischen Verbinden derselben mit den Stromsammelschienen ausgebildet ist sowie auf einen Geräte-Adapter zur Verwendung bei einem derartigen Sammelschienensystem.

Ein derartiges Sammelschienensystem ist in der DE 197 14 839 C1 angegeben. Bei diesem bekannten Sammelschienensystem sind in einer Montageeinheit mit einer im Querschnitt U-förmigen Wanne auf einem Basisabschnitt derselben längs verlaufende Stromsammelschienen angeordnet, die T-förmigen Querschnitt aufweisen. Zum Kontaktieren mit den Stromsammelschienen sind Anschluss- oder Geräte-Adapter vorgesehen, die quer zur Längsrichtung der Stromsammelschienen auf diese aufgesetzt und mit seitlichen Befestigungsabschnitten an Halteabschnitten im Bereich der Längsrandabschnitte der U-förmigen Wanne festgelegt werden. Die Stromsammelschienen, die mit ihrem T-Dachabschnitt auf dem Basisabschnitt der Wanne gelagert sind, ragen rechtwinklig von dem Basisabschnitt vor und die Adapter werden mit daran angepassten Aufnahmeschlitzen aufgesteckt und an den Stromsammelschienen kontaktiert.

In der DE 197 44 827 A1 ist ein Adapter für Stromsammelschienen angegeben, der aus einem auf den Stromsammelschienen mit Befestigungsmitteln klemmend befestigbaren Grundkörper und einem darauf gelagerten schwenkbaren Modulteil besteht.

In der EP 1 094 579 A1 ist eine Trägervorrichtung zum Anbringen elektrischer Geräte auf einem Stromleiterkanal gezeigt.

Ein weiteres Sammelschienensystem bzw. ein weiterer Geräte-Adapter ist beispielsweise in der EP 0 926 790 A3 als bekannt ausgewiesen. Bei diesem bekannten Sammelschienensystem und Geräte-Adapter sind auf der den Sammelschienen zugekehrten Unterseite des Adapters in die jeweiligen Sammelschienen einhängbare Hakenelemente angeordnet, die zur Herstellung einer sicheren mechanischen und elektrischen Verbindung federbeaufschlagte Teile aufweisen. Damit ist ein relativ aufwändiger Aufbau verbunden, und auch die Handhabung beim Anbringen und Lösen der Geräte-Adapter kann mit Schwierigkeiten verbunden sein, insbesondere wenn die Geräte-Adapter mit angekoppelten Geräten versehen sind.

Weitere derartige Geräte-Adapter sind beispielsweise in der EP 0 926 791 A3 und der DE 93 06 013 U1 gezeigt.

Der Erfindung liegt die Aufgabe zugrunde, ein Sammelschienensystem und auch einen Geräte-Adapter der eingangs genannten Art bereit zu stellen, mit dem sich ein vereinfachter Aufbau und eine einfachere Handhabung ergeben.

Diese Aufgabe wird bei dem Sammelschienensystem mit den Merkmalen des Anspruches 1 gelöst.

Mit diesen Maßnahmen sind die mechanische Befestigung des Adapters an der Montageeinheit und seine elektrische Kontaktierung an den Sammelschienen voneinander getrennt, wodurch sowohl die mechanische Kopplung als auch die elektrische Kontaktierung funktionell an die diesbezüglichen Erfordernisse besser angepasst und der Aufbau sowie die Handhabung erleichtert werden. Die Sammelschienen sind in den Sammelschienenhaltern eindeutig positioniert und stabil gelagert. Dabei ist durch die mechanische Befestigung an den beiden Endabschnitten auch eine stabile Montage gewährleistet.

Bei einem Sammelschienensystem nach Anspruch 1 mit einer Aufnahmebrücke, auf deren von den zu kontaktierten Sammelschienen abgekehrter Oberseite elektrisch mit den Sammelschienen zu verbindende Geräte festlegbar sind und auf deren Unterseite Kontaktelemente zum Herstellen eines elektrischen Kontaktes mit zugeordneten Sammelschienen angeordnet sind, ist zur Lösung der Aufgabe weiterhin vorgesehen, dass auf der Unterseite der beiden schmalen Endabschnitte des Adapters ein erster und ein zweiter Befestigungsabschnitt ausgebildet sind, die mit Halteelementen zum Festlegen des Adapters an einer Montageeinheit außerhalb des Bereiches von Kontaktierabschnitten der Kontaktelemente versehen sind.

Auch diese Maßnahmen ergeben eine Trennung von mechanischer Befestigung und elektrischer Kontaktierung und die vorstehend genannten Vorteile in Aufbau und Handhabung.

Eine für Aufbau und Handhabung vorteilhafte Ausgestaltung besteht darin, dass die Randabschnitte von einer Montageebene vorstehende Stege aufweisen, an deren vorstehenden Endbereichen die Halteabschnitte ausgebildet sind.

Zu einer stabilen, einfachen Anbringung und Abnahme des Geräte-Adapters tragen weiterhin die Maßnahmen bei, dass die Halteabschnitte als seitlich nach außen abgewinkelte Haltestrukturen ausgebildet sind und/oder Reihen von Befestigungsaufnahmen aufweisen.

Zu einem günstigen Aufbau und einer einfachen, flexiblen Montage tragen des Weiteren die Maßnahmen bei, dass die Montageeinheit im Querschnitt als flache U-förmige Wanne mit einem Basisabschnitt ausgebildet ist, an dem die seitlichen Randabschnitte angeformt und abgewinkelt oder als separate winkelförmige Profilabschnitte angebracht sind, und dass die Sammelschienen mittels quer zu der Montageeinheit angeordneter Sammelschienenhalter in der Wanne festlegbar sind.

Der Aufbau und die Handhabung des Geräte-Adapters werden dadurch begünstigt, dass ein erstes der Halteelemente als gegen eine Federkraft zum Lösen des Adapters von der Montageeinheit verstellbares Hakenelement und ein zweites der Halteelemente als mit dem zugehörigen Befestigungsabschnitt fest verbundenes Hakenelement ausgebildet sind.

Für eine sichere elektrische Verbindung bei einfacher Bedienung ist vorteilhaft vorgesehen, dass in der der Montageeinheit zugekehrten Unterseite der isolierenden Aufnahmebrücke mehrere in Längsrichtung des Adapters verlaufende Kontaktelemente gelagert sind, mittels derer einerseits ein elektrischer Kontakt mit den zugeordneten Stromsammelschienen hergestellt wird und andererseits eine Verbindung zu einem in mindestens einem Endabschnitt des Adapters ausgebildeten Anschlussabschnitt hergestellt ist. Hierbei wird eine sichere elektrische Kontaktierung dadurch unterstützt, dass die Kontaktelemente federelastisch ausgebildet und/oder mit Federkraft derart beaufschlagt sind, dass ein Kontaktdruck mit einem Kontaktabschnitt der Kontaktelemente auf der von der Montageeinheit abgewandten Außenseite der zugeordneten Stromsammelschienen erzeugt ist.

Eine einfache, stabile Anbringung von Geräten wird dadurch ermöglicht, dass auf der von der Montageeinheit abgekehrten Oberseite der Aufnahmebrücke Koppelmittel zum Anbringen von aufzunehmenden Geräten vorgesehen sind, die mittels Verbindungsleitungen elektrisch über Verbindungsaufnahmen in der Oberseite der Endabschnitte des Adapters anschließbar sind.

Bei dem Adapter besteht eine vorteilhafte Ausgestaltung für die Handhabung und den Aufbau darin, dass die Halteelemente als Hakenelemente ausgebildet sind, von denen mindestens eines verstellbar gelagert ist.

Durch den vereinfachten Aufbau und die vereinfachte Handhabung ergibt sich für den Benutzer auch eine bessere Berührungssicherheit, da die Geräte-Adapter gegebenenfalls mit daran angekoppelten Geräten leicht und in eindeutiger Weise montiert und abgenommen werden können. Zwischen den Geräte-Adaptern können auf einfache Weise auch Abdeckungen für die Sammelschienen an den Halteabschnitten der Montageeinheit angebracht werden, wobei die Abdeckungen mit entsprechenden Halteelementen wie die Adapter versehen sind.

Die Erfindung wird nachfolgend anhand von Ausführungsbeispielen unter Bezugnahme auf die Zeichnungen erläutert. Es zeigen:
- Fig. 1: eine Montageeinheit mit darin angebrachten Stromsammelschienen und einem aufzusetzenden Geräte-Adapter in einer seitlichen Ansicht,
- Fig. 2: eine Darstellung der Teile nach Fig. 1 bei aufgesetztem Geräte-Adapter,
- Fig. 3: das Sammelschienensystem nach Fig. 2 in perspektivischer Ansicht,
- Fig. 4: einen Geräte-Adapter mit daran über Koppelmittel anzubringenden Geräten in perspektivischer Darstellung bei auseinander genommener Anordnung und
- Fig. 5: die Komponenten nach Fig. 4 in zusammengesetzter perspektivischer Darstellung.

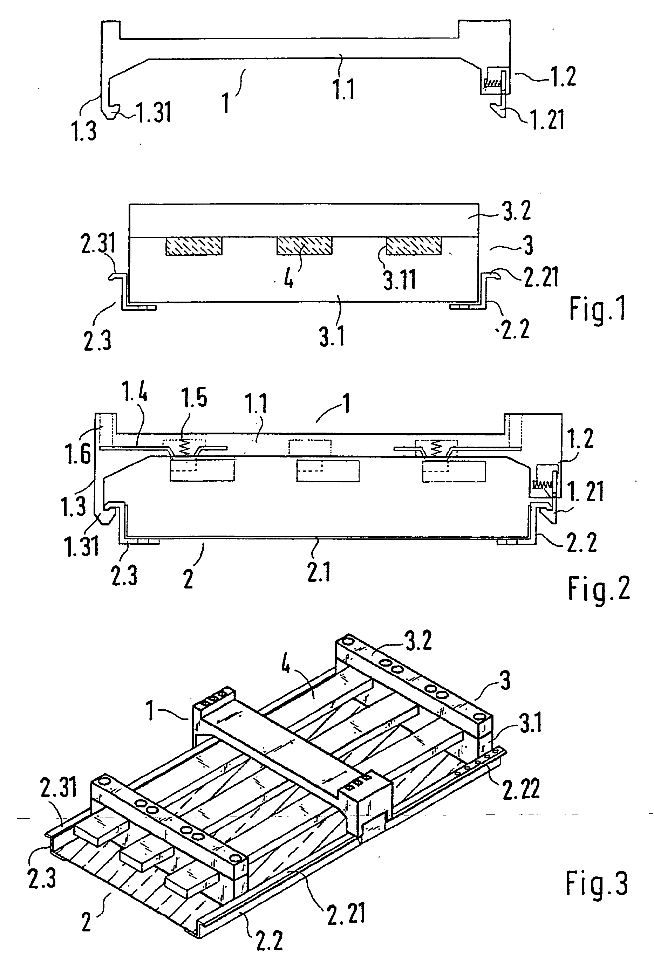

Ein in Fig. 1 gezeigtes Ausführungsbeispiel eines Sammelschienensystems zeigt eine Montageeinheit 2, in der mittels darin angebrachter Sammelschienenhalter 3 mehrere Stromsammelschienen 4 angebracht sind und an der ein mit den Sammelschienen 4 zu kontaktierender Geräte-Adapter 1 gekoppelt wird. Der angebrachte Zustand des Adapters 1 ist aus den Fig. 2 und 3 ersichtlich.

Die Montageeinheit 2 weist zwei seitliche Profilabschnitte in Form von Z-förmig abgewinkelten Randabschnitten 2.2, 2.3 auf, wobei der mittlere Abschnitt der Randabschnitte 2.2, 2.3 senkrecht von einer Montageebene absteht und die beiden Endabschnitte parallel zu der Montageebene und damit rechtwinklig zu dem mittleren Abschnitt gerichtet sind. Die der Montageebene zugekehrten Endabschnitte des ersten und des zweiten Randabschnittes 2.2, 2.3 sind dabei einander zugekehrt, während die von der Montageebene abliegenden Endabschnitte als erster und zweiter Halteabschnitt 2.21, 2.31 ausgebildet sind und voneinander weg nach außen zeigen. Zudem weisen die beiden Halteabschnitte 2.21, 2.31 kurze, nach unten zur Montageebene hin gerichtete Haltenasen auf, um die Haltewirkung zu verbessern. Zudem können, wie beispielhaft in Fig. 3 dargestellt, in den Halteabschnitten 2.21, 2.31 Halteaufnahmen 2.22 vorgesehen sein, die vorteilhaft auch einen gängigen Rasterabstand besitzen können.

Um die Montageeinheit 2 zu bilden, können die profilierten Randabschnitte 2.2, 2.3 unmittelbar auf einer Montageebene, insbesondere Montageplatte angebracht sein oder aber, wie aus den Fig. 2 und 3 ersichtlich, mit einem eigenen, vorzugsweise plattenartigen Basisabschnitt 2.1 mit einander verbunden sein. Dabei können die Randabschnitte 2.2, 2.3 als separate Teile an dem Basisabschnitt 2.1 angebracht oder einstückig an diesem angeformt sein. Wird eine Isolierung der Montageeinheit 2 gewünscht, können der Basisabschnitt 2.1 und/ oder die Randabschnitte 2.2, 2.3 aus isolierendem Material hergestellt oder mit einer isolierenden Schicht überzogen sein. Die Montageeinheit 2 ist in ihrem Querschnitt als flache U-förmige Wanne ausgebildet, d.h. ihre Breite ist um ein Mehrfaches, z.B. mehr als 3 Mal oder 4 Mal ausgedehnter als ihre Höhe.

In der Montageeinheit 2 zwischen den mittleren Abschnitten der Randabschnitte 2.2, 2.3 sind die Sammelschienenhalter 3 quer zur Längsrichtung der Montageeinheit 2 angebracht und beispielsweise an dem Basisabschnitt 2.1 und/oder dem mittleren Abschnitt der Randabschnitte 2.2, 2.3 oder auch an den Halteabschnitten 2.21, 2.31 mittels entsprechender Befestigungsmittel befestigt. Die Sammelschienen 4 sind in auf der von dem Basisabschnitt 2.1 abgekehrten Oberseite der Sammetschienenhalter, und zwar in einem Unterteil 3.1 derselben gelagert und mit einem aufgeschraubten oder aufgerasteten Oberteil 3.2 stabil festgelegt.

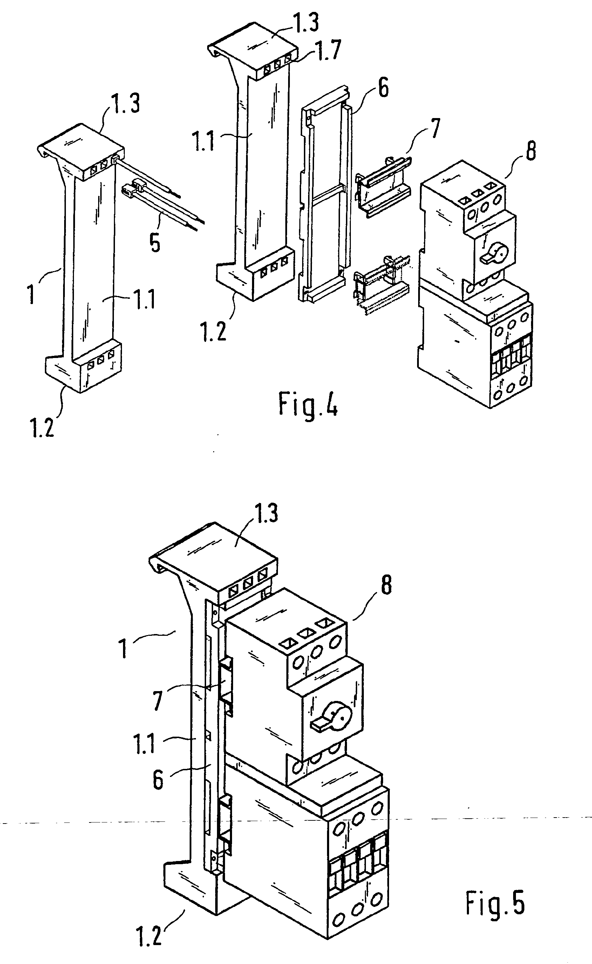

Der auch in den Fig. 4 und 5 dargestellte, in Draufsicht im Wesentlichen rechteckförmige Adapter 1 weist im Bereich seiner beiderseitigen schmalen Endabschnitte seitliche Befestigungsabschnitte 1.2, 1.3 mit auf der Unterseite angeordneten hakenartigen Halteelementen 1.21. 1.31 auf. Auf der Oberseite der Befestigungsabschnitte 1.2, 1.3 sind in nach oben gerichteten Vorsprüngen verbindungsaufnahmen 1.7 für eine elektrische Verbindung mit aufzunehmenden Geräten 8 vorgesehen, die auf einer die beiden Endabschnitte verbindenden Aufnahmebrücke 1.1 mittels Koppelmitteln, beispielsweise eines plattenartigen Koppelteils 6 und/oder hutschienenförmiger Koppelstücke 7 angebracht werden, wie aus den Fig. 4 und 5 ersichtlich. Die elektrische Verbindung der Geräte 8 mit elektrischen Kontakten in den Verbindungsaufnahmen 1.7 erfolgt über Verbindungsleitungen 5.

Um den Adapter 1 mechanisch mit der Montageeinheit 2 zu verbinden, werden die hakenförmigen Halteelemente 1.21, 1.31 an den zugeordneten Halteabschnitten 2.21, 2.31 der Montageeinheit 2 eingehängt, wie insbesondere aus Fig. 2 ersichtlich. Hierzu weisen die Halteelemente 1.21, 1.31 des Adapters im Abstand der Halteabschnitte 2.21, 2.31 gegeneinander gerichtete Haltenasen auf, die die Halteabschnitte 2.21, 2.31 im aufgesetzten Zustand des Adapters 1 hintergreifen, wobei eine gewisse Haltespannung gebildet ist. Die Festlegung des Adapters 1 geschieht durch eine Art Aufrastvorgang, wozu das erste hakenartige Halteelement 1.21 schwenkbar oder verschiebbar gelagert und federvorgespannt ist, so dass der Hakenteil gegen die Federkraft nach außen auslenkbar ist und mittels der Federkraft in der Haltestellung gehalten wird. Das zweite Halteelement 1.31 ist fest mit dem Endabschnitt bzw. dem zweiten Befestigungsabschnitt 1.3 verbunden, vorzugsweise angeformt. Mit diesen Maßnahmen kann der Adapter 1 auf einfache Weise zunächst mit dem zweiten Halteelemente 1.31 an dem entsprechenden Halteabschnitt 2.31 eingehängt und anschließend unter einer Art Schwenkbewegung mittels Verrasten des ersten Halteelementes 1.21 an dem ersten Halteabschnitt 1.21 festgelegt werden, wobei das erste Halteelement 1.21 über eine an ihm angeordnete Auflaufschräge nach außen ausgelenkt wird. Zum Lösen kann das erste Halteelement 1.21 auf einfache Weise manuell gegen die Federkraft nach außen bewegt werden.

Alternativ zu der beschriebenen und gezeigten Ausbildung der Befestigungsabschnitte 1.2, 1.3 mit den Halteelementen 1.21, 1.31 ist auch eine Schraubbefestigung oder anders ausgebildete Rastverbindung mit geeigneten Rastelementen und Rastgegenelementen möglich.

Um die elektrische Kontaktierung des Adapters 1 und des daran angeschlossenen Gerätes 8 mit den Sammelschienen 4 herzustellen, sind auf der Unterseite der Aufnahmebrücke 1.1 federleistenartige Kontaktelemente 1.4 isoliert gegeneinander eingebettet, die einerseits Kontaktabschnitte zum Kontaktieren mit der Oberseite der zugeordneten Stromsammelschienen 4 aufweisen und andererseits mit einem Anschlussabschnitt 1.6 in die Verbindungsaufnahme 1.7 übergehen. Das Kontaktelement 1.4 ist im Bereich des Kontaktabschnittes beispielsweise zusätzlich mit einer Federkraft einer Andruckfeder 1.5 beaufschlagt, um den elektrischen Kontakt zu begünstigen. Anschlussabschnitte 1.6 können in beiden oder nur einem der beiden Endabschnitte des Adapters 1 ausgebildet sein; entsprechend sind die Kontaktelemente 1.4 mit den Anschlussabschnitten 1.6 verbunden. Mittels der elastischen Lagerung der Kontaktelemente 1.4 wird auch dann eine sichere Kontaktierung erreicht, wenn die Oberseiten der Sammelschienen 4 nicht genau auf einer Ebene liegen sollten. Außerdem kann durch den Kontaktdruck gewährleistet werden, dass der Adapter 1 spielfrei an den Halteabschnitten 2.21, 2.31 festgelegt wird. Die spielfreie Festlegung kann aber auch dadurch sichergestellt werden, dass die Unterseite der Brücke auf der Oberseite der Sammelschienen 4 abgestützt ist und der Adapter 1 insbesondere in der Aufnahmebrücke 1.1 eine gewisse Elastizität aufweist. Bei anderer Ausbildung kann eine stabile, spielfreie Verbindung des Adapters 1 mit der Montageeinheit 2 bei sicherer Kontaktgabe mit den Kontaktelementen 1.4 beispielsweise auch durch Abstützelemente auf der Oberseite der Montageeinheit 2 erfolgen, wobei die Fixierung mittels entsprechende Halteabschnitte untergreifender Rastelemente oder mittels Schraubverbindungen erfolgt. In allen Fällen ist die Handhabung beim Anbringen und Abnehmen des Adapters 1 einfach, wobei die elektrische Kontaktierung stets sicher beim Ausführen der mechanischen Befestigung erfolgt.

In Bereichen, in denen die Sammelschienen 4 von den Adaptern 1 nicht abgedeckt sind, können Abdeckelemente an den Halteabschnitten 2.21, 2.31 der Montageeinheit 2 mit entsprechenden Halteelementen 1.21, 1.31 oder ähnlichen Halteelementen wie die Adapter 1 angebracht werden.

## Patentansprüche

1. Sammelschienensystem mit einer Montageeinheit (2) zum Aufnehmen mehrerer Stromsammelschienen (4) und mit mindestens einem Anschluss- oder Geräte-Adapter (1), der eine Aufnahmebrücke (1.1) zum Aufnehmen von Geräten (8) aufweist und zum elektrischen Verbinden derselben Geräte mit den Stromsammelschienen ausgebildet ist, wobei die im Querschnitt als flache U-förmige Wanne mit einem Basisabschnitt (2.1) ausgebildete Montageeinheit (2) an seitlichen, parallel zueinander verlaufenden Längs-Randabschnitten (2.2, 2.3) Halteabschnitte (2.21, 2.31) aufweist und der mindestens eine Adapter (1) an seinen beiden schmalen Endabschnitten mit einem ersten und einem zweiten Befestigungsabschnitt (1.2, 1.3) versehen ist, die an die zugeordneten oder zuzuordnenden Randabschnitte (2.2, 2.3) angepasst und mit mit den Halteabschnitten (2.21, 2.31) zum Festlegen des Adapters 81) zusammenwirkenden Halteelementen (1.21, 1.31) versehen sind,
**dadurch gekennzeichnet,**
**dass** zum Festlegen der Sammelschienen (4) in der Montageeinheit (2) Sammelschienenhalter (3) angeordnet sind, wobei die Sammelschienenhalter (3) elektrisch isolierend sind und quer zu den Sammelschienen (4) in der Wanne angeordnet sind und wobei die Sammelschienen (4) auf der von dem Basisabschnitt (2.1) abgekehrten Oberseite der Sammelschienenhalter (3) in einem Unterteil (3.1) derselben gelagert und mit einem aufgeschraubten oder aufgerasteten Oberteil (3.2) festgelegt sind.

2. Sammelschienensystem nach Anspruch 1,
**dadurch gekennzeichnet,**
**dass** die Randabschnitte (2.2, 2.3) von einer Montageebene vorstehende Stege aufweisen, an deren vorstehenden Endbereichen die Halteabschnitte (2.21, 2.31) ausgebildet sind.

3. Sammelschienensystem nach Anspruch 2,
**dadurch gekennzeichnet,**
**dass** die Halteabschnitte (2.21, 2.31) als seitlich nach außen abgewinkelte Haltestrukturen ausgebildet sind und/oder Reihen von Befestigungsaufnahmen (2.22) aufweisen.

4. Sammelschienensystem nach einem der vorhergehenden Ansprüche,
**dadurch gekennzeichnet,**
**dass** die seitlichen Randabschnitte (2.2, 2.3) an de Basisabschnitt angeformt und abgewinkelt oder als separate winkelförmige Profilabschnitte angebracht sind.

5. Sammelschienensystem nach einem der vorhergehenden Ansprüche,
**dadurch gekennzeichnet,**
**dass** ein erstes der Halteelemente (1.11) als gegen eine Federkraft zum Lösen des Adapters (1) von der Montageeinheit (2) verstellbares Hakenelement und ein zweites der Halteelemente (1.21) als mit dem zugehörigen Befestigungsabschnitt (1.3) fest verbundenes Hakenelement ausgebildet sind.

6. Sammelschienensystem nach einem der vorhergehenden Ansprüche,
**dadurch gekennzeichnet,**
**dass** in der der Montageeinheit (2) zugekehrten Unterseite der isolierenden Aufnahmebrücke (1.1) mehrere in Längsrichtung des Adapters (1) verlaufende Kontaktelemente (1.4) gelagert sind, mittels derer einerseits ein elektrischer Kontakt mit den zugeordneten Stromsammelschienen (4) hergestellt wird und andererseits eine Verbindung zu einem in mindestens einem Endabschnitt des Adapters (1) ausgebildeten Anschlussabschnitt (1.6) hergestellt ist.

7. Sammelschienensystem nach Anspruch 6,
**dadurch gekennzeichnet,**
**dass** die Kontaktelemente (1.4) federelastisch ausgebildet und/oder mit Federkraft derart beaufschlagt sind, dass ein Kontaktdruck mit einem Kontaktabschnitt der Kontaktelemente (1.4) auf der von der Montageeinheit (2) abgewandten Außenseite der zugeordneten Stromsammelschienen (4) erzeugt ist.

8. Sammelschienensystem nach einem der vorhergehenden Ansprüche,
**dadurch gekennzeichnet,**
**dass** auf der von der Montageeinheit (2) abgekehrten Oberseite der Aufnahmebrücke (1.1) Koppelmittel (6, 7) zum Anbringen von aufzunehmenden Geräten (8) vorgesehen sind, die mittels Verbindungsleitungen (5) elektrisch über Verbindungsaufnahmen (1.7) in der Oberseite der Endabschnitte des Adapters (1) anschließbar sind.

9. Sammelschienensystem nach einem der vorhergehenden Ansprüche,
**gekennzeichnet durch** eine Aufnahmebrücke (1.1), auf deren von den zu kontaktierenden Sammelschienen (4) abgekehrter Oberseite elektrisch mit den Sammelschienen (4) zu verbindende Geräte (8) festlegbar sind und auf deren Unterseite Kontaktelemente (1.4) zum Herstellen eines elektrischen Kontaktes mit zugeordneten Sammelschienen (4) angeordnet sind, wobei auf der Unterseite der beiden schmalen Endabschnitte des Adapters (1) ein erster und ein zweiter Befestigungsabschnitt (1.2, 1.3) ausgebildet sind, die mit Halteelementen (1.21, 1.31) zum Festlegen des Adapters (1) an der Montageeinheit (2) außerhalb des Bereiches von Kontaktierabschnitten der Kontaktelemente (1.4) versehen sind.

10. Sammelschienensystem nach Anspruch 9,
**dadurch gekennzeichnet,**
**dass** die Halteelemente (1.21, 1.31) als Hakenelemente ausgebildet sind, von denen mindestens eines verstellbar gelagert ist.

## Claims

1. Busbar system having an assembly unit (2) for receiving a plurality of current busbars (4) and having at least one connecting or appliance adaptor (1), which has a receiving bridge (1.1) for receiving appliances (8) and is configured for electrical connection of the same appliances to the current busbars, the assembly unit (2), which is configured in cross-section as a flat U-shaped tub with a base portion (2.1), having retaining portions (2.21, 2.31) on lateral longitudinal edge portions (2.2, 2.3) which extend parallel to each other, and the at least one adaptor (1) being provided at both its narrow end portions with a first and a second mounting portion (1.2, 1.3) which are adapted to the edge portions (2.2, 2.3), which are associated or to be associated, and are provided with retaining elements (1.21, 1.31) which cooperate with the retaining portions (2.21, 2.31) for fixing the adaptor (1),
**characterised in that**
busbar holders (3) are disposed in the assembly unit (2) for fixing the busbars (4), the busbar holders (3) being electrically insulating and being disposed in the tub transversely relative to the busbars (4) and the busbars (4) being mounted on the upper side of the busbar holders (3), which is orientated away from the base portion (2.1), in a lower part (3.1) of the same and being fixed with an upper part (3.2) which is screwed-on or clipped-on.

2. Busbar system according to claim 1,
**characterised in that**
the edge portions (2.2, 2.3) have webs which project from an assembly plane and on the projecting end regions of which the retaining portions (2.21, 2.31) are configured.

3. Busbar system according to claim 2,
**characterised in that**
the retaining portions (2.21, 2.31) are configured as retaining structures which are laterally angled-off externally and/or have rows of mounting receiving means (2.22).

4. Busbar system according to one of the preceding claims,
**characterised in that**
the lateral edge portions (2.2, 2.3) are moulded onto the base portion and are angled-off or are fitted as separate angled profile sections.

5. Busbar system according to one of the preceding claims,
**characterised in that**
a first of the retaining elements (1.11) is configured as a hook element which can be displaced in opposition to a spring force in order to detach the adaptor (1) from the assembly unit (2) and a second of the retaining elements (1.21) is configured as a hook element which is securely connected to the associated mounting portion (1.3).

6. Busbar system according to one of the preceding claims,
**characterised in that**
there is mounted in the underside of the insulating receiving bridge (1.1), which is orientated towards the assembly unit (2), a plurality of contact elements (1.4) which extend in the longitudinal direction of the adaptor (1) and by means of which an electrical contact with the associated current busbars (4) is produced on the one hand and, on the other hand, a connection is produced to a connecting portion (1.6) which is configured in at least one end portion of the adaptor (1).

7. Busbar system according to claim 6,
**characterised in that**
the contact elements (1.4) are configured to be resilient and/or are actuated with a spring force in such a manner that a contact pressure is produced with a contact portion of the contact elements (1.4) on the outer side of the associated current busbars (4) which is orientated away from the assembly unit (2).

8. Busbar system according to one of the preceding claims,
**characterised in that**
coupling means (6, 7) are provided on the upper side of the receiving bridge (1.1), which is orientated away from the assembly unit (2), in order to fit appliances (8) which are to be received and which can be connected electrically by means of connection lines (5) via connection receiving means (1.7) in the upper side of the end portions of the adaptor (1).

9. Busbar system according to one of the preceding claims,
**characterised by** a receiving bridge (1.1), on the upper side of which, which is orientated away from the busbars (4) to be contacted, appliances (8) which are to be connected electrically to the busbars (4) can be fixed and on the lower side of which receiving bridge contact elements (1.4) for producing an electrical contact with associated busbars (4) are disposed, a first and a second mounting portion (1.2, 1.3) being configured on the underside of the two narrow end portions of the adaptor (1), which mounting portions are provided with retaining elements (1.21, 1.31) for fixing the adaptor (1) on the assembly unit (2) outwith the region of contacting portions of the contact elements (1.4).

10. Busbar system according to claim 9,
**characterised in that**
the retaining elements (1.21, 1.31) are configured as hook elements, at least one of which is mounted displaceably.

## Revendications

1. Système de barres collectrices comprenant une unité de montage (2) prévue pour recevoir plusieurs barres collectrices de courant (4) et comprenant au moins un adaptateur de connexion ou d'appareil (1) qui présente un pont de réception (1.1) pour recevoir des appareils (8) et est conçu pour le raccordement électrique desdits appareils avec les barres collectrices de courant, sachant que l'unité de montage (2) conçue en coupe transversale comme une cuvette plate en forme de U avec une section de base (2.1) présente des sections de retenue (2.21, 2.31) sur des sections de bord longitudinales (2.2, 2.3) latérales parallèles l'une à l'autre et que ledit au moins un adaptateur (1) est muni à ses deux sections d'extrémité étroites d'une première et d'une deuxième sections de fixation (1.2, 1.3) qui sont adaptées aux sections de bord (2.2, 2.3) associées ou à associer et munies d'éléments de retenue (1.21, 1.31) coopérant avec les sections de retenue (2.21, 2.31) pour la fixation de l'adaptateur (1),
**caractérisé en ce que**
des supports de barre collectrice (3) sont disposés dans l'unité de montage (2) pour la fixation des barres collectrices (4), les supports de barre collectrice (3) étant électriquement isolants et disposés transversalement par rapport aux barres collectrices (4) dans la cuvette et les barres collectrices (4) étant montées sur la face supérieure des supports de barre collectrice (3) opposée à la section de base (2.1) dans une partie inférieure (3.1) desdits supports et fixées par une partie supérieure (3.2) vissée ou encliquetée sur celle-ci.

2. Système de barres collectrices selon la revendication 1,
**caractérisé en ce que**
les sections de bord (2.2, 2.3) présentent des branches en saillie d'un plan de montage sur les parties terminales en saillie desquelles les sections de retenue (2.21, 2.31) sont formées.

3. Système de barres collectrices selon la revendication 2,
**caractérisé en ce que**
les sections de retenue (2.21, 2.31) sont conçues comme des structures de retenue coudées latéralement vers l'extérieur et/ou présentent des rangées de logements de fixation (2.22).

4. Système de barres collectrices selon l'une des revendications précédentes,
**caractérisé en ce que**
les sections de bord latérales (2.2, 2.3) sont formées et coudées sur la section de base ou ajoutées en tant que sections de profilé en équerre séparées.

5. Système de barres collectrices selon l'une des revendications précédentes,
**caractérisé en ce que**
un premier des éléments de retenue (1.11) est conçu comme un élément à crochet déplaçable contre la force d'un ressort pour libérer l'adaptateur (1) de l'unité de montage (2) et un deuxième des éléments de retenue (1.21) comme un élément à crochet lié rigidement à la section de fixation (1.3) correspondante.

6. Système de barres collectrices selon l'une des revendications précédentes,
**caractérisé en ce que**
sur la face inférieure du pont de réception (1.1) isolant tournée vers l'unité de montage (2) sont montés plusieurs éléments de contact (1.4) s'étendant en direction longitudinale de l'adaptateur (1), au moyen desquels est établi, d'une part, un contact électrique avec les barres collectrices de courant (4) correspondantes et est établie, d'autre part, une liaison avec une section de connexion (1.6) formée dans au moins une section d'extrémité de l'adaptateur (1).

7. Système de barres collectrices selon la revendication 6,
**caractérisé en ce que**
les éléments de contact (1.4) sont conçus avec élasticité de ressort et/ou soumis à une force de ressort de manière qu'une pression de contact avec une section de contact des éléments de contact (1.4) soit produite sur la face extérieure opposée à l'unité de montage (2) des barres collectrices de courant (4) correspondantes.

8. Système de barres collectrices selon l'une des revendications précédentes,
**caractérisé en ce que**
sur la face supérieure du pont de réception (1.1) opposée à l'unité de montage (2) sont prévus des moyens de couplage (6, 7) pour le montage d'appareils (8) à recevoir, qui peuvent être connectés électriquement au moyen de lignes de raccordement (5) par l'intermédiaire de logements de raccordement (1.7) dans la face supérieure des sections d'extrémité de l'adaptateur (1).

9. Système de barres collectrices selon l'une des revendications précédentes,
**caractérisé par** un pont de réception (1.1) sur la face supérieure opposée aux barres collectrices (4) à contacter duquel peuvent être fixés des appareils (8) à raccorder électriquement avec les barres collectrices (4) et sur la face inférieure duquel sont disposés des éléments de contact (1.4) permettant d'établir un contact électrique avec des barres collectrices (4) correspondantes, sachant que sont formés sur la face inférieure des deux sections d'extrémité étroites de l'adaptateur (1) une première et une deuxième sections de fixation (1.2, 1.3) qui sont munies d'éléments de retenue (1.21, 1.31) pour la fixation de l'adaptateur (1) sur l'unité de montage (2) en dehors de la zone de sections de contactage des éléments de contact (1.4).

10. Système de barres collectrices selon la revendication 9,
**caractérisé en ce que**
les éléments de retenue (1.21, 1.31) sont conçus comme des éléments à crochet parmi lesquels au moins un est monté de manière déplaçable.
